# EUROPEAN PATENT SPECIFICATION

(11) **EP 1 582 438 B1**
(45) Date of publication and mention of the grant of the patent: **11.06.2008**
(21) Application number: 04007934.5
(22) Date of filing: 01.04.2004
(51) Int. Cl.: B62D 7/18, B60G 3/20, B60G 15/06

(54) **A device for steerable suspension of a vehicle wheel**
Gerät für eine lenkbare Aufhängung eines Fahrzeugrades
Dispositif de suspension dirigeable de roue de véhicule

(43) Date of publication of application: 05.10.2005
(73) Proprietor: Ford Global Technologies, LLC, Dearborn, MI 48126 (US)
(72) Inventor: Stenvall, Lars, 459 91 Ljungskile (SE)
(74) Representative: Engstrand, Maria Linnéa

(56) References cited:
- EP-A- 0 370 217
- EP-A- 0 402 777
- DE-A- 19 535 923
- US-A- 4 202 563
- US-A- 5 984 329

## Description

### FIELD OF THE INVENTION

The present invention relates to a device for steerable suspension of a driven vehicle wheel according to the preamble of claim 1, and as known from EP 0 402 777 A.

The invention is applicable on different types of driven vehicle wheels, in particular driven vehicle front wheels, for steering a vehicle such as a private car.

### BACKGROUND OF THE INVENTION

The most commonly occurring suspension arrangement for steerable vehicle front wheels in private cars is of the type utilising a McPherson system. Such a system has a kingpin axis, i.e. a pivot axis formed by two bearings around which axis the vehicle wheel is steerably journalled. The lower bearing of the kingpin axis is often a ball joint connected to the frame of the vehicle via a link arm. Furthermore, in a McPherson system the strut of a shock absorber and the kingpin axis have an upper bearing in common, and thus, the kingpin axis passes through that bearing and the ball joint.

Although the previously known McPherson system provides a satisfactory function in many cases, it has undesired characteristics as will appear below.

For every wheel suspension system of the present type there is normally a distance between the kingpin axis and the position where the propulsion force acts on the wheel. The propulsion force acts, at least theoretically, in the wheel centre and, since the king pin axis does not coincide with the wheel centre, there is a distance called kingpin offset forming a disturbance lever arm. The kingpin offset in combination with the propulsion force will give rise to a "disturbing" torque around the kingpin axis. As long as the propulsion force and the kingpin offset are the same on both the driven wheels, the effect of such a disturbance torque occurring on each wheel will be balanced, i.e. there will be no net disturbance torque. However, when the propulsion force distribution on the wheels is unequal, which often is the case for example under slippery road conditions in winter time, this will result in an unbalanced disturbance torque situation. This unbalanced state, i.e. the net disturbance torque, will in turn tend to pivot the wheels and steer the vehicle towards the left or right depending on which wheel exhibits the largest propulsion force. In other words, the vehicle will tend to move to the side of the road having the lowest friction.

Also a case where the disturbance lever arm of one wheel is different from the disturbance lever arm of the other wheel will result in an unbalanced disturbance torque situation. Since the propulsion force acts substantially straight above the ground contact point between the tyre and the ground, the disturbance lever arm (the distance from the kingpin to the ground contact point) will vary in accordance with the different positions of the ground contact point and thus, the disturbance torque will vary. Due to an uneven road, in practice the position of the ground contact point of one wheel, relative to the kingpin axis, could be different from the position of the ground contact point of the other wheel.

To minimize the problems associated with unequal propulsion force distribution, the kingpin offset should be reduced to the greatest possible extent. However, in the above described McPherson system the kingpin axis passes through the strut upper bearing and the link arm ball joint, and this implies that the strut extension and the position thereof inside the tyre determine the position of the kingpin axis, and thus, the smallest length possible for the kingpin offset is limited by the fact that the strut has to be situated inside the tyre. In other words the larger the wheel width, the larger the kingpin offset.

There are suspension systems for reducing the kingpin offset based on forming a virtual pivot axis. In such a system the virtual kingpin axis could at least theoretically coincide with the wheel centre, which means that the kingpin offset is zero. However, such a system is very complicated and expensive due to the need of both an upper link arm divided into two upper sub link arms and a lower link arm divided into two lower sub link arms, and a ball joint arranged on each sub link arm, to form the wheel suspension.

In EP 1 319 533 A1 another solution for reducing the size of the kingpin offset is suggested. Two bearings are arranged in a supporting unit to form a substantially vertical kingpin axis. The bearings of the kingpin axis are positioned very close to the wheel centre which means that each bearing is arranged between the wheel centre and the inside radial surface of the wheel rim, looked at the wheel in the direction of the rotary axis of the wheel. Furthermore, the bearings are separated from the strut of the shock absorber, which is arranged on the top of the supporting unit. Thus, the extension of the kingpin axis does not depend on the longitudinal extension of the strut, and the arranging of the kingpin axis is not limited by the tyre width. In this way, the kingpin axis can be positioned substantially vertical and closer to the wheel centre, thereby reducing the kingpin offset compared to a McPherson system. However, such a construction has a relative short distance between the upper and lower bearing which could be a disadvantage due to an unfavourable force distribution on the bearings.

Furthermore, there is still a need of further reducing the kingpin axis, and at the same time providing the possibility to obtain a certain direction or rather inclination angle of the kingpin axis to make sure that a certain negative so called ground offset is obtained. The ground offset is defined as the distance between the position of the ground contact point, which at least theoretically is situated in the middle of the tyre relative to the width thereof, and the position where the prolongation of the pivot axis of the wheel intersects the ground surface. For example a completely vertical kingpin axis would most likely result in a positive ground offset, i.e. the pivot axis would intersect the ground surface inside the ground contact point. A correctly chosen ground offset enables the driver to receive feed back about the road conditions, and when the brakes of the wheels are used in a situation where the friction between the tyre and the road is not the same for both the wheels, improved brake stability can be obtained.

Prior art documents EP 0 402 777 A and US 4 202 563 describe wheel suspension systems where the wheel hub is rotationally carried by a wheel hub carrier which is arranged outboard of a brake disc.

### THE OBJECT OF THE INVENTION AND SUMMARY OF THE INVENTION

The object of the invention is to provide a device of the type mentioned by way of introduction by which device the kingpin offset can be reduced in order to obtain a disturbance torque as a low as possible.

In accordance with a first aspect of the invention this object is achieved by means of providing a device for steerable suspension of a driven vehicle wheel according to claim 1.

The feature that at least a part of one of the first and second bearings is adapted to be located between the outermost radial circumferential surface of the brake disc and the overlapping portion of the inner surface of the wheel rim implies that the kingpin axis can be positioned closer to the wheel centre, since the inner lateral surface of the brake disc does not limit the positioning of the kingpin axis to the same extent, thereby enabling a relatively small kingpin offset and a relatively small net disturbance torque in the case of unequal force distribution on the wheels.

Also in the case an unbalanced situation arises due to a variation of the disturbance lever arm such a relatively small kingpin offset is often preferred, because at least the largest possible disturbance lever arm is determined by the value of the kingpin offset.

In a preferred embodiment of the device according to the invention, at least a part of the second lower bearing is arranged between the outermost radial circumferential surface of the brake disc and the overlapping portion of the inner surface of the wheel rim. This means that the kingpin axis can be arranged in a position very close to the wheel centre and at the same time the desired ground offset can be obtained.

According to another aspect of the invention there is provided an arrangement for steerable suspension of a driven vehicle wheel, the arrangement comprising a first upper bearing and a second lower bearing, said first and second bearings being arranged in a supporting unit in order to form a geometrical pivot axis around which a driven vehicle wheel is intended to be steerably journalled, the arrangement is adapted for use with a lower link arm connecting the supporting unit and the frame of a vehicle, and the arrangement is characterized in that the connection point between the supporting unit and the lower link arm is different from the position of said second lower bearing and arranged at a level higher than the position of said second lower bearing when the supporting unit and the link arm are connected to each other.

Other advantageous features and functions of different embodiments of the device and the arrangement for steerable suspension of a driven vehicle wheel according to the invention appear from the following detailed description and dependent claims.

### BRIEF DESCRIPTION OF THE DRAWINGS

With reference to appended drawings below follows a closer description of embodiments of the invention cited as examples.
In the drawings:
Fig. 1 is a perspective view illustrating a device for steerable suspension of a vehicle in accordance with the invention,
Fig. 1a is an enlarged cross-sectional view illustrating the second lower bearing of the device in Fig. 1,
Fig. 1b is an enlarged cross-sectional view illustrating a variant of the second lower bearing in Fig. 1a,
Fig. 2 is a perspective view of the supporting unit of the device in Fig. 1, and
Fig. 3 is a perspective view illustrating a variant of the device according to the invention.

### DETAILED DESCRIPTION OF PREFERRED EMBODIMENTS OF THE INVENTION

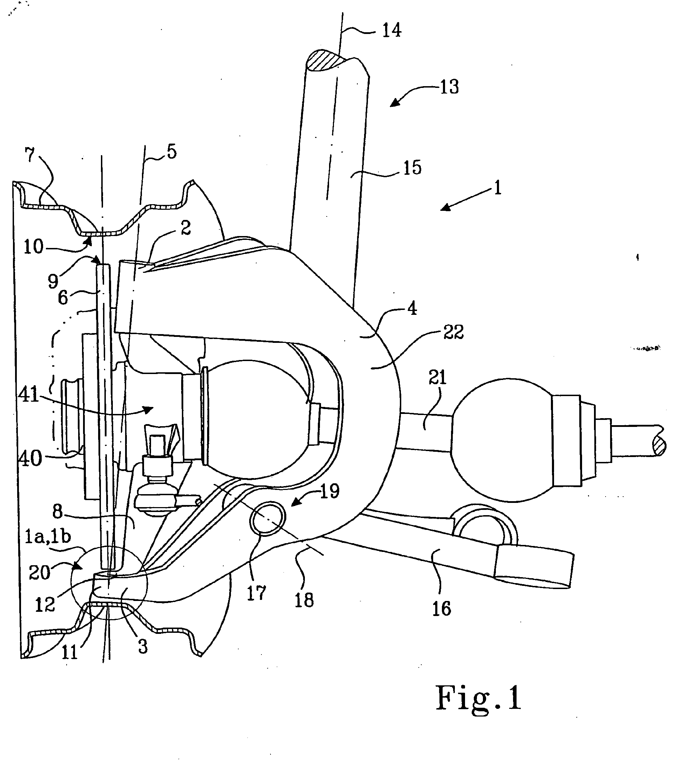

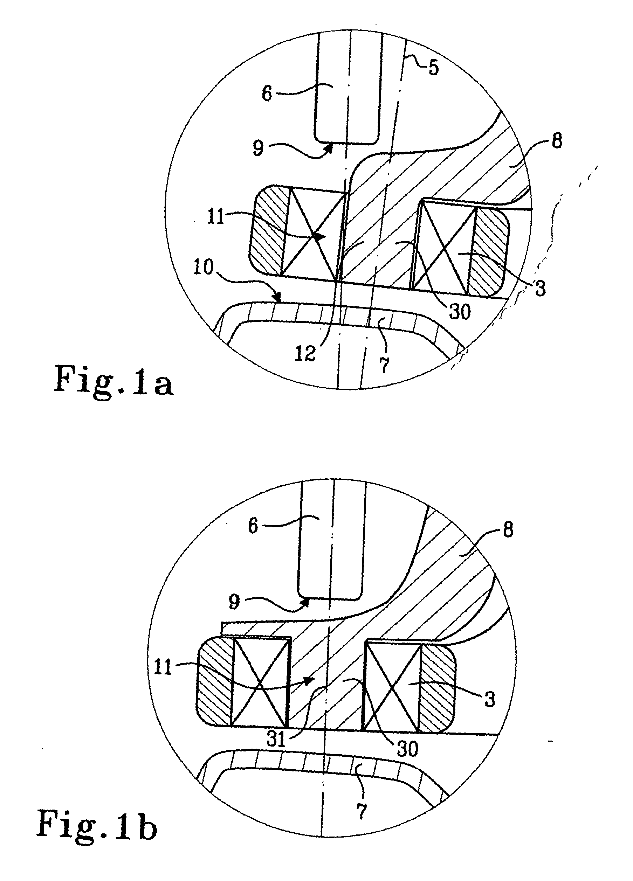

Fig. 1 illustrates in perspective a device 1 for steerable suspension of a driven vehicle wheel designed in accordance with the invention. The device comprises a first upper bearing 2 and a second lower bearing 3 arranged in a supporting unit 4 in order to form a geometrical pivot axis 5 around which a driven vehicle wheel, preferably a driven front wheel, is intended to be steerably journalled.

The device 1 is adapted for use with a wheel assembly having a brake disc 6 and a wheel rim 7. In the illustrated embodiment a wheel hub carrier 8 provided with a brake disc 6 is journalled in relation to the supporting unit 4 by means of said upper and lower bearings 2, 3. The brake disc 6 has an outermost radial circumferential surface 9 and is encompassed by a wheel rim 7 with an inner surface 10. The wheel rim 7 is arranged substantially concentrically around the brake disc 6 so that a portion of said inner surface 10 of the wheel rim 7 and said circumferential surface 9 of the brake disc 6 overlap each other in the radial direction of the brake disc 6. See also Figs. 1a and 1b.

According to a first aspect of the invention at least a part 11 of one of the first and second bearings is adapted to be located between the outermost radial circumferential surface 9 of the brake disc 6 and the overlapping portion of the inner surface 10 of the wheel rim 7. In other words, at least a part 11 of one of the first and second bearings 2, 3 is arranged outside the outermost radial circumferential surface 9 of the brake disc 6 and said part 11 intersects a geometrical plane which is a prolongation of the extension of the brake disc 6 in radial direction from said outermost radial circumferential surface 9. In all embodiments illustrated, a part 11 of the second lower bearing 3 is arranged in the space between the outermost radial circumferential surface 9 of the brake disc 6 and the overlapping portion of the inner surface 10 of the wheel rim 7.

The size of the part 11 of the bearing 3 which is arranged between the outermost radial circumferential surface 9 of the brake disc 6 and the overlapping portion of the inner surface 10 of the wheel rim 7, may be different in different embodiments of the device according to the invention. In the embodiment of the invention illustrated in Fig. 1 and 1a, a part 12 of the hub carrier 8 is arranged between the outermost radial circumferential surface 9 of the brake disc 6 and the overlapping portion of the inner surface 10 of the wheel rim 7. This part 12 of the hub carrier 8 is a portion of a shaft pivot 30 coupled to the second lower bearing 3.

In a further embodiment of the invention illustrated in Fig. 1b, a centre portion, i.e. the portion comprising the pivot centre 31, of the bearing 3, is arranged between the outermost radial circumferential surface 9 of the brake disc 6 and the overlapping portion of the inner surface 10 of the wheel rim 7.

The device is also adapted for use with a shock absorber 13 arranged on the supporting unit 4 or being integral with the supporting unit 4. The position of the first upper bearing 2 as well as the position of the second bearing 3 is separated from the fixing points of the shock absorber 13, and furthermore the extension of said geometrical pivot axis 5, i.e. kingpin axis, is different from the longitudinal axis 14 of the shock absorber 13. In the embodiment illustrated in Fig. 1, a strut 15 of a shock absorber 13 is coupled to the supporting unit 4 in the upper end thereof. The strut 15 extends between the supporting unit 4 and a vehicle body.

The supporting unit 4 may be pivotally coupled to a lower link arm 16, for example by a bushing 17 arranged in the supporting unit 4, allowing some movement of the supporting unit and the link arm 16 relative each other around a substantially horizontal axis 18. The lower link arm 16 connects the supporting unit 4 and a vehicle frame to each other. The connection point 19 between the supporting unit 4 and the lower link arm 16 is different from the position 20 of said second lower bearing 3. Preferably, the connection point 19 is situated at a level higher than the position 20 of said second lower bearing 3. In other words the position of the second lower bearing 3 and the position of the connection point 19 between the supporting unit 4 and the lower link arm are independent of each other. Thus, the second lower bearing 3 can be arranged in a more favourable position to form the desired kingpin axis 5, at the same time as the connection point 19 between the supporting unit 4 and the lower link arm 16 can be arranged in a position to fulfil other demands, such as optimizing the roll centre height of the vehicle.

According to another aspect of the invention there is provided an arrangement for steerable suspension of a driven vehicle wheel. The arrangement comprises a first upper bearing 2 and a second lower bearing 3 which are arranged in a supporting unit 4 in order to form a geometrical pivot axis 5 around which a driven vehicle wheel is intended to be steerably journalled. The arrangement is adapted for use with a lower link arm 16 connecting the supporting unit 4 and a vehicle frame. Such an arrangement is characterized in that the connection point 19 between the supporting unit 4 and the lower link arm 16 is different from the position 20 of said second lower bearing 3, and arranged at a level higher than the position 20 of said second lower bearing 3 when the supporting unit 4 is arranged in its intended upright position and the link arm 16 is connected thereto.

The roll centre of a vehicle is determined by the relative positions of the connection points of the link arm 16. To confer to a vehicle the desired roll centre height and thus, counteract the tendency for the vehicle to overturn and create stability in high speed driving, the position of the connection point 19 between the supporting unit 4 and the link arm 16 has to be chosen while considering other characteristics of the vehicle, such as the point of balance of the vehicle etc. In some cases the connection point 19 is preferably arranged at a higher level than the connection point between the link arm 16 and the vehicle frame. However, for reasons of creating a vehicle having a large road clearance the connection point between the link arm 16 and the vehicle frame could be arranged relatively high. The feature that the connection point 19 between the supporting unit 4 and the lower link arm 16 is different from the position 20 of said second lower bearing 3, and arranged at a level higher than the position 20 of said second lower bearing 3, implies high flexibility and enables the roll centre height of the vehicle to be optimized at the same time as a relatively large road clearance can be obtained.

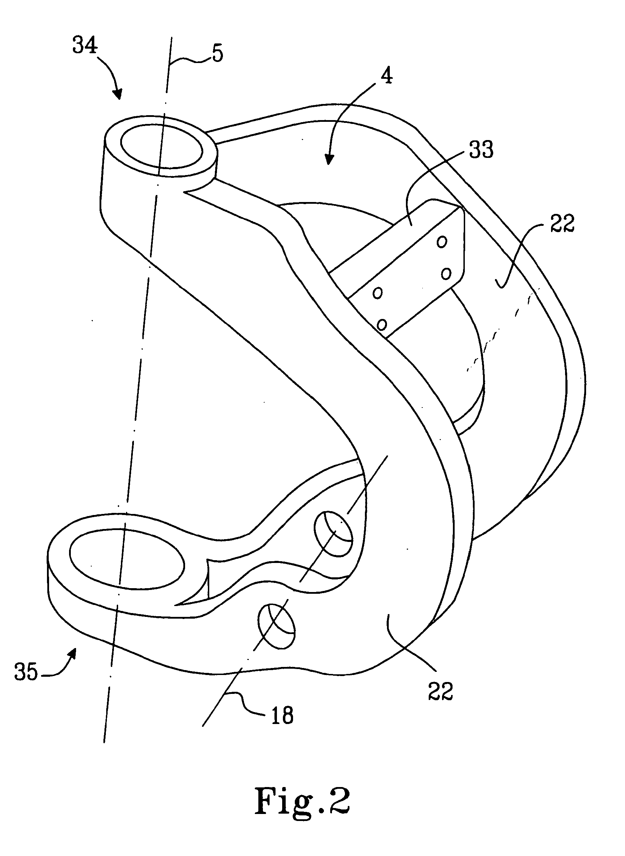

Furthermore, the supporting unit 4 is designed to allow a front wheel drive shaft 21 to be coupled to the wheel hub carrier 8. The supporting unit 4 illustrated in Fig. 2 has two C-shaped arms 22 leaving a space therebetween for the drive shaft 21. The arms 22 of the supporting unit 4 are designed to receive the bushing 17 or similar for providing the horizontal axis 18 and attachment of the lower link arm 16 to the supporting unit 4. The supporting unit 4 may be designed in many different sizes and of different materials. As an example only, such a C-shaped arm 22 has a distance between the first and second bearings 2, 3 in the interval 15-50 cm, preferably about 30 cm, and has a largest distance between the geometrical pivot axis 5 and the arm 22, in a direction substantially perpendicular to the geometrical pivot axis 5, in the interval 5-25 cm, preferably about 15 cm. The supporting unit 4 and/or the hub carrier 8 may preferably be made of a light metal, such as aluminium or similar, having the sufficient strength, but also steel alloys can be used. The supporting unit 4 may be forged from cast aluminium or similar, and be machined to the desired shape. In case of two arms 22 as described above the supporting unit 4 may be made by welding the two arms to each other.

Furthermore, a bar 33 to which the strut 15 of the shock absorber 13 can be attached connects the two arms 22 in the upper part of the supporting unit 4. The upper end 34 of the supporting unit 4 is designed to receive the upper bearing 2, and the lower end 35 thereof is designed to receive the lower bearing 3.

Although a first upper bearing, a conical roller bearing for instance, for taking up both radial and axial forces, and a second lower bearing, such as a slide bearing or a roller bearing, for taking up radial forces, are preferred, other choices of bearings are also possible within the scope of the invention. For example, the upper bearing could be constituted by a combination of two bearings, one bearing intended for radial forces and one bearing for axial forces, or by a ball joint. In the embodiment illustrated in Fig. 1 the second lower bearing 3 is a bearing arranged for taking up forces acting radially relative to the geometrical pivot axis only, whereas the first upper bearing 2 is arranged for taking up both forces acting axially and radially relative to the geometrical pivot axis.

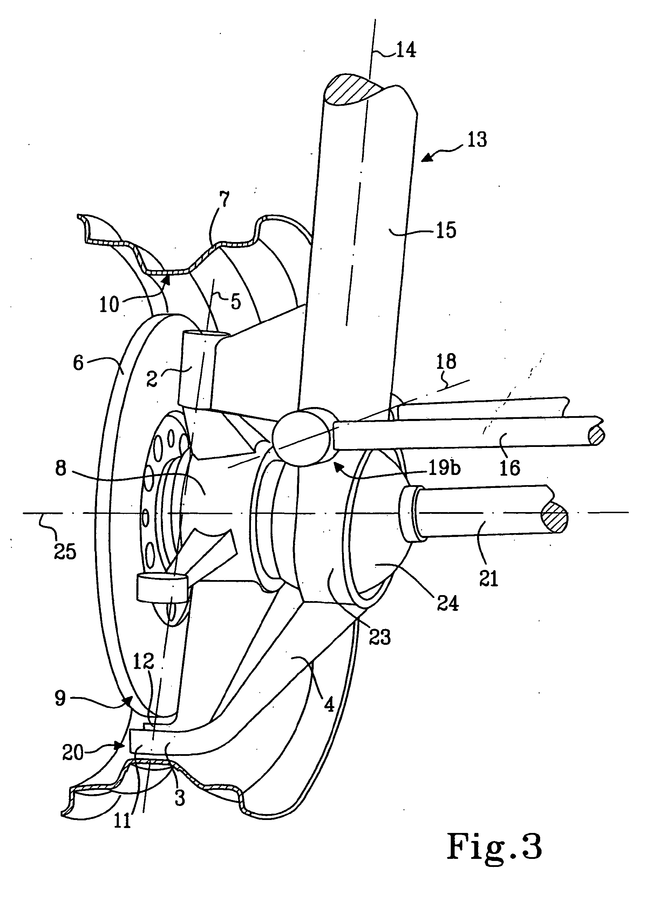

Certainly, other designs of the supporting unit are also possible. In Fig. 3 a variant of the supporting unit 4 integral with the strut 15 of a shock absorber is illustrated. The supporting unit 4 has a circular shaped portion 23 enclosing a coupling component 24 connecting the wheel hub carrier 8 and the drive shaft 21. In this embodiment of the invention the connection point 19b between the supporting unit 4 and the lower link arm 16 is arranged at a level above the wheel centre 25, i.e. above the rotation axis of the wheel, and above the drive shaft 21. This embodiment may be applied for example in case an extreme large ground clearance is desired.

It is to be understood that the present invention is not limited to the embodiments described above and illustrated in the drawings; rather, the skilled person will recognize that many changes and modifications may be made within the scope of the appended claims. For example the dimensions and the material of the components comprised in the device according to the invention may be varied in many ways.

## Claims

1. A device (1) for steerable suspension of a driven vehicle wheel, the device being adapted for use with a wheel arrangement having a wheel hub (40) provided with a brake disc (6) with an outermost radial circumferential surface (9) and a wheel rim (7) with a inner surface (10) and a wheel hub carrier (8), the position (41) where the wheel hub (40) is rotationally carried by the wheel hub carrier (8) being arranged inboard of the brake disc (6), the wheel rim (7) being arranged substantially concentrically around the brake disc (6) so that a portion of said inner surface (10) of the wheel rim (7) and said circumferential surface (9) of the brake disc (6) overlap each other in the radial direction, the device (1) comprising a first upper bearing (2) and a second lower bearing (3), said first and second bearings (2, 3) being arranged in a supporting unit (4) in order to form a geometrical pivot axis (5) around which a driven vehicle wheel is intended to be steerably journalled, **characterized in that** at least a part (11) of one of the first and second bearings (2, 3) is adapted to be located between the outermost radial circumferential surface (9) of the brake disc (6) and the overlapping portion of the inner surface (10) of the wheel rim (7).

2. A device according to claim 1, **characterized in that** the pivot centre (31) of at least one of the first and second bearings (3) is comprised in said part (11).

3. A device according to claim 1 or 2, **characterized in that** at least a part (11) of the second lower bearing (3) is adapted to be located between the outermost radial circumferential surface (9) of the brake disc (6) and the overlapping portion of the inner surface (10) of the wheel rim (7).

4. A device according to any preceding claim, **characterized in that** the device is adapted for use with the wheel hub carrier (8) which is pivotally arranged on the supporting unit (4) by the first and second bearings (2, 3), a part (12) of said wheel hub carrier (8) being arranged between the outermost radial circumferential surface (9) of the brake disc (6) and the overlapping portion of the inner surface (10) of the wheel rim (7).

5. A device according to claim 4, **characterized in that** at least a part of a shaft pivot (30), coupled to the second lower bearing (3), is comprised in said part (12) of the wheel hub carrier (8).

6. A device according to any preceding claim, **characterized in that** the device is adapted for use with a shock absorber (13) arranged on the supporting unit (4), the position of the first upper bearing (2) being separated from the fixing points of the shock absorber (13).

7. A device according to any preceding claim, **characterized in that** the device is adapted for use with a shock absorber (13) arranged on the supporting unit (4), the position of the second lower bearing (3) being separated from the fixing points of the shock absorber (13).

8. A device according to any preceding claim, **characterized in that** the device is adapted for use with a shock absorber (13) arranged on the supporting unit (4), the extension of said geometrical pivot axis (5) being different from the longitudinal axis (14) of the shock absorber (13).

9. A device according to any preceding claim, **characterized in that** the device is adapted for use with a lower link arm (16) connecting the supporting unit (4) and the frame of a vehicle, the connection point (19) between the supporting unit (4) and the lower link arm (16) being different from the position (20) of said second lower bearing (3).

10. A device according to claim 9, **characterized in that** said connection point (19, 19b) is arranged at a level higher than the position (20) of said second lower bearing (3) when the supporting unit (4) and the link arm (16) are connected to each other.

11. A device according to claim 9 or 10, **characterized in that** said connection point (19b) is arranged in a position situated at a level higher than the wheel centre when a wheel is suspended by the supporting unit (4).

12. A device according to any preceding claim, **characterized in that** the second lower bearing (3) is a slide bearing.

13. A device according to any preceding claim, **characterized in that** the second lower bearing (3) is a roller bearing.

14. A device according to any preceding claim, **characterized in that** the second lower bearing (3) is arranged for taking up forces acting radially relative to the geometrical pivot axis (5) only.

15. A device according to any preceding claim, **characterized in that** the first upper bearing (2) is arranged for taking up both forces acting axially and radially relative to the geometrical pivot axis (5).

16. A device according to any preceding claim, **characterized in that** the first upper bearing (2) is arranged for taking up substantially all the forces acting axially relative to the geometrical pivot axis (5).

17. A device according to any preceding claim, **characterized in that** the device is adapted to be used together with a driven front wheel.

18. A device according to any preceding claim, **characterized in that** at least a part (11) of one of the first and second bearings (2, 3) is arranged outside the outermost radial circumferential surface (9) of the brake disc (6) and said part (11) intersects a geometrical plane which is a prolongation of the extension of the brake disc (6) in radial direction from said outermost radial circumferential surface (9).

## Patentansprüche

1. Vorrichtung (1) zur lenkbaren Aufhängung eines angetriebenen Fahrzeugrades, wobei die Vorrichtung für den Einsatz mit einer Radanordnung ausgelegt ist, welche eine Radnabe (40), die mit einer Bremsscheibe (6) mit einer äußersten radialen Umfangsoberfläche (9) und einer Radfelge (7) mit einer inneren Oberfläche (10) ausgestattet ist, und einen Radnabenträger (8) aufweist, wobei die Position (41), wo die Radnabe (40) drehbar durch den Radnabenträger (8) gehalten wird, auf der Innenseite der Bremsscheibe (6) angeordnet ist, wobei die Radfelge (7) im Wesentlichen konzentrisch um die Bremsscheibe (6) angeordnet ist, so dass ein Abschnitt der inneren Oberfläche (10) der Radfelge (7) und der Umfangsoberfläche (9) der Bremsscheibe (6) einander in der radialen Richtung überlappen, wobei die Vorrichtung (1) ein erstes oberes Lager (2) und ein zweites unteres Lager (3) umfasst, wobei das erste und das zweite Lager (2, 3) in einer Trageeinheit (4) angeordnet sind, um eine geometrische Schwenkachse (5) auszubilden, um welche ein angetriebenes Fahrzeugrad lenkbar gedreht werden soll, **dadurch gekennzeichnet, dass** wenigstens ein Teil (11) eines der Lager aus ersten und zweiten Lager (2, 3) ausgelegt ist, um zwischen der äußersten radialen Umfangsoberfläche (9) der Bremsscheibe (6) und dem überlappendem Abschnitt der inneren Oberfläche (10) der Radfelge (7) angeordnet zu sein.

2. Vorrichtung nach Anspruch 1, **dadurch gekennzeichnet, dass** das Drehzentrum (31) wenigstens eines der Lager der Gruppe erstes und zweites Lager (3) in dem Teil (11) umfasst ist.

3. Vorrichtung nach Anspruch 1 oder 2, **dadurch gekennzeichnet, dass** wenigstens ein Teil (11) des zweiten unteren Lagers (3) ausgelegt ist, um zwischen der äußersten radialen Umfangsoberfläche (9) der Bremsscheibe (6) und dem überlappendem Abschnitt der inneren Oberfläche (10) der Radfelge (7) angeordnet zu sein.

4. Vorrichtung nach einem der vorangehenden Ansprüche, **dadurch gekennzeichnet, dass** die Vorrichtung für den Einsatz mit dem Radnabenträger (8) ausgelegt ist, welcher schwenkbar auf der Trageeinheit (4) durch das erste und das zweite Lager (2, 3) angeordnet ist, wobei ein Teil (12) des Radnabenträgers (8) zwischen der äußersten radialen Umfangsoberfläche (9) der Bremsscheibe (6) und dem überlappenden Abschnitt der inneren Oberfläche (10) der Radnabe (7) angeordnet ist.

5. Vorrichtung nach Anspruch 4, **dadurch gekennzeichnet, dass** wenigstens ein Teil einer Wellenachse (30), welche an das zweite untere Lager (3) gekuppelt ist, in dem Teil (12) des Radnabenträgers (8) umfasst ist.

6. Vorrichtung nach einem der vorangehenden Ansprüche, **dadurch gekennzeichnet, dass** die Vorrichtung für den Einsatz mit einem Stoßdämpfer (13) ausgelegt ist, welcher auf der Trageeinheit (4) angeordnet ist, wobei die Position des ersten oberen Lagers (2) von den Befestigungspunkten des Stoßdämpfers (13) getrennt ist.

7. Vorrichtung nach einem der vorangehenden Ansprüche, **dadurch gekennzeichnet, dass** die Vorrichtung für den Einsatz mit einem Stoßdämpfer (13) ausgelegt ist, welcher auf der Trageeinheit (4) angeordnet ist, wobei die Position des zweiten unteren Lagers (3) von den Befestigungspunkten des Stoßdämpfers (13) getrennt ist.

8. Vorrichtung nach einem der vorangehenden Ansprüche, **dadurch gekennzeichnet, dass** die Vorrichtung für den Einsatz mit einem Stoßdämpfer (13) ausgelegt ist, welcher auf der Trageeinheit (4) angeordnet ist, wobei die Verlängerung der geometrischen Schwenkachse (5) unterschiedlich zur Längsachse (14) des Stoßdämpfers (13) ist.

9. Vorrichtung nach einem der vorangehenden Ansprüche, **dadurch gekennzeichnet, dass** die Vorrichtung für den Einsatz mit einem unteren Verbindungsarm (16) ausgelegt ist, welcher die Trageeinheit (4) und den Rahmen eines Fahrzeugs verbindet, wobei der Verbindungspunkt (19) zwischen der Trageeinheit (4) und dem unteren Verbindungsarm (16) unterschiedlich von der Position (20) des zweiten unteren Lagers (3) ist.

10. Vorrichtung nach Anspruch 9, **dadurch gekennzeichnet, dass** der Verbindungspunkt (19, 19b) auf einer Ebene höher angeordnet ist als die Position (20) des zweiten unteren Lagers (3), wenn die Trageeinheit (4) und der untere Verbindungsarm (16) miteinander verbunden sind.

11. Vorrichtung nach Anspruch 9 oder 10, **dadurch gekennzeichnet, dass** der Verbindungspunkt (19b) in einer Position angeordnet ist, welche sich auf einer Ebene befindet, die höher als das Radzentrum ist, wenn ein Rad durch die Trageeinheit (4) aufgehängt ist.

12. Vorrichtung nach einem der vorangehenden Ansprüche, **dadurch gekennzeichnet, dass** das zweite untere Lager (3) ein Gleitlager ist.

13. Vorrichtung nach einem der vorangehenden Ansprüche, **dadurch gekennzeichnet, dass** das zweite untere Lager (3) ein Wälzlager ist.

14. Vorrichtung nach einem der vorangehenden Ansprüche, **dadurch gekennzeichnet, dass** das zweite untere Lager (3) zur Aufnahme von Kräften angeordnet ist, welche ausschließlich radial relativ zur geometrischen Schwenkachse (5) wirken.

15. Vorrichtung nach einem der vorangehenden Ansprüche, **dadurch gekennzeichnet, dass** das erste obere Lager (2) zur Aufnahme von Kräften angeordnet ist, welche axial als auch radial relativ zur geometrischen Schwenkachse (5) wirken.

16. Vorrichtung nach einem der vorangehenden Ansprüche, **dadurch gekennzeichnet, dass** das erste obere Lager (2) zur Aufnahme von im Wesentlichen allen Kräften angeordnet ist, welche axial relativ zur geometrischen Schwenkachse (5) wirken.

17. Vorrichtung nach einem der vorangehenden Ansprüche, **dadurch gekennzeichnet, dass** die Vorrichtung dafür ausgelegt ist, um gemeinsam mit einem angetriebenen Vorderrad verwendet zu werden.

18. Vorrichtung nach einem der vorangehenden Ansprüche, **dadurch gekennzeichnet, dass** wenigstens ein Teil (11) von einem aus erstem und zweiten Lager (2, 3) außerhalb der äußersten radialen Umfangsoberfläche (9) der Bremsscheibe (6) angeordnet ist und dass der Teil (11) eine geometrische Ebene schneidet, welche eine Weiterführung der Verlängerung der Bremsscheibe (6) in radialer Richtung von der äußersten radialen Umfangsoberfläche (9) ist.

## Revendications

1. Dispositif (1) de suspension orientable d'une roue menée de véhicule, le dispositif étant apte à une utilisation avec un système de roue ayant un moyeu (40) de roue équipé d'un disque (6) de frein avec une surface circonférentielle radiale extérieure (9) et une jante (7) avec une surface intérieure (10) et un support (8) de moyeu de roue, la position (41) où le moyeu (40) de roue est porté en rotation par le support (8) de moyeu de roue étant située vers l'intérieur du disque (6) de frein, la jante (7) étant située de manière sensiblement concentrique autour du disque (6) de frein de telle sorte qu'une partie de ladite surface intérieure (10) de la jante (7) et de ladite surface circonférentielle (9) du disque (6) de frein se chevauchent dans la direction radiale, le dispositif (1) comprenant un premier palier supérieur (2) et un deuxième palier inférieur (3), lesdits premier et deuxième paliers (2, 3) étant agencés dans une unité de support (4) de manière à former un axe de pivot géométrique (5) autour duquel une roue menée de véhicule est destinée à être montée tourillonnante de manière orientable, ***caractérisé en ce qu'**au* moins une partie (11) de l'un du premier et du deuxième paliers (2, 3) est apte à être placée entre la surface circonférentielle radiale extérieure (9) du disque (6) de frein et la portion en chevauchement de la surface intérieure (10) de la jante (7).

2. Dispositif selon la revendication 1, ***caractérisé en ce que*** le centre (31) de pivotement d'au moins l'un d'entre le premier et le deuxième paliers (3) est compris dans ladite partie (11).

3. Dispositif selon la revendication 1 ou 2, ***caractérisé en ce qu'**au* moins une partie (11) du deuxième palier inférieur (3) est apte à être placée entre la surface circonférentielle radiale extérieure (9) du disque (6) de frein et la portion en chevauchement de la surface intérieure (10) de la jante (7).

4. Dispositif selon l'une quelconque des revendications précédentes, ***caractérisé en ce que*** le dispositif est apte à une utilisation avec le support (8) de moyeu de roue qui est monté pivotant sur l'unité de support (4) par le premier et le deuxième paliers (2, 3), une partie (12) dudit support (8) de moyeu de roue étant agencée entre la surface circonférentielle radiale extérieure (9) du disque (6) de frein et la portion en chevauchement de la surface intérieure (10) de la jante (7).

5. Dispositif selon la revendication 4, ***caractérisé en ce qu'**au* moins une partie d'un arbre-pivot (30) couplé au deuxième palier inférieur (3), est comprise dans ladite partie (12) du support (8) de moyeu de roue.

6. Dispositif selon l'une quelconque des revendications précédentes, ***caractérisé en ce que*** le dispositif est apte à une utilisation avec un amortisseur (13) agencé sur l'unité de support (4), la position du premier palier supérieur (2) étant séparée des points de fixation de l'amortisseur (13).

7. Dispositif selon l'une quelconque des revendications précédentes, ***caractérisé en ce que*** le dispositif est apte à une utilisation avec un amortisseur (13) agencé sur l'unité de support (4), la position du deuxième palier inférieur (3) étant séparée des points de fixation de l'amortisseur (13).

8. Dispositif selon l'une quelconque des revendications précédentes, ***caractérisé en ce que*** le dispositif est apte à une utilisation avec un amortisseur (13) agencé sur l'unité de support (4), l'extension dudit axe de pivot géométrique (5) étant différente de l'axe longitudinal (14) de l'amortisseur (13).

9. Dispositif selon l'une quelconque des revendications précédentes, ***caractérisé en ce que*** le dispositif est apte à une utilisation avec un bras de liaison inférieur (16) reliant l'unité de support (4) et le châssis d'un véhicule, le point de connexion (19) entre l'unité de support (4) et le bras de liaison inférieur (16) étant différent de la position (20) dudit deuxième palier inférieur (3).

10. Dispositif selon la revendication 9, ***caractérisé en ce que*** ledit point de connexion (19, 19b) est placé à un niveau supérieur à la position (20) dudit deuxième palier inférieur (3) lorsque l'unité de support (4) et le bras de liaison (16) sont raccordés l'un à l'autre.

11. Dispositif selon la revendication 9 ou 10, ***caractérisé en ce que*** ledit point de connexion (19b) est placé dans une position située à un niveau supérieur au centre de la roue lorsqu'une roue est reçue par l'unité de support (4).

12. Dispositif selon l'une quelconque des revendications précédentes, ***caractérisé en ce que*** le deuxième palier inférieur (3) est un palier à glissement.

13. Dispositif selon l'une quelconque des revendications précédentes, ***caractérisé en ce que*** le deuxième palier inférieur (3) est un palier à rouleaux.

14. Dispositif selon l'une quelconque des revendications précédentes, ***caractérisé en ce que*** le deuxième palier inférieur (3) est agencé pour absorber les forces agissant radialement par rapport à l'axe de pivot géométrique (5) seulement.

15. Dispositif selon l'une quelconque des revendications précédentes, ***caractérisé en ce que*** le premier palier supérieur (2) est agencé pour absorber les forces agissant à la fois axialement et radialement par rapport à l'axe de pivot géométrique (5).

16. Dispositif selon l'une quelconque des revendications précédentes, ***caractérisé en ce que*** le premier palier supérieur (2) est agencé pour absorber sensiblement toutes les forces agissant axialement par rapport à l'axe de pivot géométrique (5).

17. Dispositif selon l'une quelconque des revendications précédentes, ***caractérisé en ce que*** le dispositif est apte à être utilisée avec une roue avant menée.

18. Dispositif selon l'une quelconque des revendications précédentes, ***caractérisé en ce qu'**au* moins une partie (11) de l'un d'entre le premier et le deuxième paliers (2, 3) est disposée à l'extérieur de la surface circonférentielle radiale extérieure (9) du disque (6) de frein et ladite partie (11) intersecte un plan géométrique qui est une prolongation de l'extension du disque (6) de frein dans une direction radiale depuis ladite surface circonférentielle radiale extérieure (9).
